# EUROPÄISCHE PATENTSCHRIFT

(11) **EP 1 034 114 B1**
(45) Veröffentlichungstag und Bekanntmachung des Hinweises auf die Patenterteilung: **13.02.2002**
(21) Anmeldenummer: 98965695.4
(22) Anmeldetag: 23.11.1998
(51) Int. Cl.: B65D 21/02, B65D 1/12, B65D 71/00

(54) **STAPELBARER MEHRWEGE-BEHÄLTER**
STACKABLE RE-USABLE CONTAINER
RECIPIENT REUTILISABLE GERBABLE

(30) Priorität: 25.11.1997 DE 29720725 U; 22.05.1998 DE 29809094 U
(43) Veröffentlichungstag der Anmeldung: 13.09.2000
(73) Patentinhaber: MAUSER-WERKE GmbH & Co. KG, 50321 Brühl (DE)
(72) Erfinder: PRZYTULLA, Dietmar, D-50171 Kerpen (DE); ATTA, Khaled, D-50374 Erftstadt (DE)
(86) Internationale Anmeldenummer: EP9807554
(87) Internationale Veröffentlichungsnummer: WO9926852

(56) Entgegenhaltungen:
- EP-A- 0 504 718
- EP-A- 0 673 841
- EP-A- 0 745 538
- DE-A- 1 586 834
- DE-A- 1 918 548
- DE-U- 9 408 722
- FR-A- 2 385 594
- GB-A- 2 137 158

## Beschreibung

Die Erfindung betrifft einen Mehrwege-Behälter aus thermoplastischem Kunststoff, mit wenigstens einer Einfüll- und Entnahmeöffnung im Oberboden bzw. Behälterdeckel und mit einem oberen und einem unteren umlaufenden Stapelring.

Ein ähnlicher Kunststoff-Behälter ist beispielsweise aus der DE-A 26 29 630 bekannt. Dieser bekannte Behälter mit extrudierter dünnwandiger Seitenwandung besitzt eine vergleichsweise schlechte Stapelbelastbarkeit, ist nur unzureichend restentleerbar und nicht für eine Mehrfachverwendung geeignet.

Ein weiterer, ähnlicher Kunststoffbehälter ist aus der GB-A-2 137 158 bekannt.

Es ist Aufgabe der Erfindung, derartige Nachteile zu beseitigen, und einen Mehrwege-Behälter anzugeben, der stabil ausgebildet ist, der auch ohne Zwischenelemente (wie z. B. Stapelpaletten) mehrfach direkt übereinanderstapelbar ist, der gut restentleerbar ist, und der insbesondere mehrfach verwendbar und gut handhabbar ist.

Diese Aufgabe wird erfindungsgemäß mit den kennzeichnenden Merkmalen des Patentanspruches 1 gelöst. Dadurch, daß der obere Stapelring einen etwas größeren Durchmesser als der untere Stapelring aufweist, und daß der obere Stapelring auf seiner oberen Stirnkante innenseitig eine dem Durchmesser des unteren Stapelringes angepaßte Einformung und außenseitig einen nach oben stehenden Flanschring derart aufweist, daß bei Übereinanderstapelung der untere Stapelring des oberen Behälters in die Einformung des oberen Stapelringes eingestellt und von außen formschlüssig von dem nach oben stehenden Flanschring zentriert wird, ist eine sichere Mehrfachstapelung von erfindungsgemäßen Behältern unter Vermeidung von Stapelpaletten ermöglicht. Der größere Durchmesser des oberen Stapelringes gestattet auch eine bessere Handhabbarkeit und Manipulierbarkeit von derartigen befüllten Behältern. In den Unteransprüchen sind weitere vorteilhafte Ausgestaltungsvarianten der vorliegenden Erfindung enthalten.

Durch die konstruktive Ausgestaltung des Behälters und die damit erreichten Vorteile wird ermöglicht, daß der erfindungsgemäße Behälter insbesondere auch für vergleichsweise gefährliche Flüssigkeiten wie z. B. Pflanzenschutzmittel (Herbizide, Pestizide) gut geeignet und mehrfach verwendbar ist. Der neuartige Mehrwege-Behälter zeichnet sich weiterhin durch folgende Merkmale und Vorteile aus, wobei :
- der obere Rand am oberen Ende des Verbindungssteges des oberen Stapelringes im Querschnitt rechteckförmig massiv ausgebildet ist, von dem der Flanschring außen in Axialrichtung nach oben absteht,
- der Verbindungssteg des oberen Stapelringes leicht schräg konisch nach außen aufgeweitet ist,
- der Behälterkörper in der Mitte über ein gewisses Stück vollzylindrisch ausgebildet ist und oben und unten zur Anbindungsstelle des oberen und zur Anbindungsstelle des unteren Stapelringes hin leicht gewölbt bzw. konisch eingezogen ist,
- die Höhe (= axiale Länge) des gewölbten Einzugsbereiches der Behälterwandung von der Anbindungsstelle des oberen bzw. unteren Stapelringes bzw. des jeweiligen Verbindunssteges bis zum Beginn des vollzylindrischen Bereiches der Behälterwandung hin ca. 110 mm beträgt,
- der größte Durchmesser eines von Hand manipulierbaren bzw. tragbaren Behälters mit begrenztem Fassungsvermögen von maximal 70 Litern im Bereich der vollzylindrischen Behälterwandung bzw. des äußeren Randes des oberen Stapelringes ca. 380 mm beträgt,
- der Oberboden im wesentlichen flach oder leicht gewölbt ausgebildet ist und in seinem flachen Randbereich zwei gegenüberliegende, hochstehende Spundstutzen mit gasdicht verschließbaren Spundöffnungen aufweist,
- der im wesentlichen flache bzw. leicht nach außen gewölbte (= bombierte) Oberboden über ein schräg konisches bzw. gewölbt ausgebildetes Ringstück an der Anbindungsstelle des oberen Stapelringes an den konisch eingezogenen Bereich der unteren Behälterwandung angeschlossen ist,
- der Unterboden zu einer Seite leicht schräg bzw. flach abfallend derart verläuft, daß unterhalb eines Spundstutzens eine Mulde (= Senke) als Pumpensumpf ausgebildet ist,
- im Unterboden im Bereich des Pumpensumpfes wenigstens drei leicht nach innen hochstehende Einformungen als Zentrierung für das untere Ende eines Pumprohres (z. B. ein Micromatic-Einfüll- und Entleerungssaugrohr) ausgebildet sind,
- der mittlere Bereich des Unterbodens zum Zwecke einer besseren Restentleerung leicht nach innen bombiert bzw. nach oben eingewölbt ausgebildet ist,
- der mittlere Bereich des Oberbodens zum Zwecke einer besseren Überkopf-Restentleerung leicht nach innen bombiert bzw. nach unten eingewölbt ausgebildet ist,
- die Behälterwandung mehrschichtig ausgebildet ist und aus wenigstens zwei oder mehreren verschiedenen Kunststoff-Materialien besteht (CoExtrusion),
- der Behälter ein begrenztes Fassungsvermögen von maximal ca. 70 Litern aufweist und mit wenigstens zwei Handgriffen im oberen Stapelring ausgestattet ist, so daß der Behälter noch von Hand manipulierbar bzw. tragbar ist,
- in einer einzigen erfindungsgemäßen Wechselblasform durch Einsetzen von verschieden hohen Ringstücken im vollzylindrischen Bereich des Behälterkörpers verschieden hohe Behälter (mit gleichem Durchmesser, Oberboden und Unterboden) mit Fassungsvermögen von z. B. 25 I, 30 I, 50 I, 60 I oder 70 I hergestellt werden können,
- durch Vorsehung von entsprechenden Durchbrechungen (z. B. Bohrungen) in dem Verbindungssteg des unteren Stabilisierungsringes oberhalb des abgewinkelten Fußringes die Möglichkeit zur gegenseitigen Fixierung des unteren Fußringes eines aufgestapelten Behälters mit dem oberen Stapelring eines untergestapelten Behälters gegeben ist, wobei entsprechende Befestigungsmittel (wie z. B. Drahtklammern oder Kunststoff-Kabelbinder) durch eine Durchbrechung und eine Grifföffnung hindurchführbar sind,
- zur gegenseitigen Fixierung wenigstens zwei nebeneinanderstehende Behälter so ausgerichtet sind, daß ihre Grifföffnungen in einer Flucht liegen, so daß ein langgestrecktes Befestigungsmittel (wie z. B. ein Spannband oder eine Holzlatte bzw. ein Brett) durch die Grifföffnungen steckbar ist, und die Behälter gegeneinander fixierbar sind,
- zur Erhöhung der Stapelsicherheit bei Lagerung und Transport mehrere auf eine Palette aufgestapelte Behälter mittels durch die Grifföffnungen im oberen Stapelring oder/und durch die Durchbrechungen im unteren Fußring durchgesteckter Befestigungsmittel gegeneinander und/oder auf der Palette selbst fixierbar sind.

Die neue Blasform zur Herstellung eines erfindungsgemäßen Mehrwege-Behälters zeichnet sich insbesondere dadurch aus, daß in den beiden Blasformhälften jeweils ein Einsatz vorgesehen ist, mittels dem die im oberen Stapelring angeordneten Grifföffnungen ausgestanzt werden.

Die Blasform ist weiterhin als Wechselblasform ausgebildet, wobei die Blasformhälften im vollzylindrischen Teil für den mittleren Bereich des Behälters horizontal geteilt sind, so daß durch entsprechendes Auswechseln und Einsetzen eines jeweiligen Ringstückes auf einfache Weise verschiedene Behältergrößen mit gleichem Durchmesser, aber mit unterschiedlichen Höhen herstellbar sind. So können durch Einsetzen eines jeweiligen mittleren Ringstückes in einer einzigen Blasform verschiedene Behältergrößen mit einem Füllvolumen von 25 bis 70 Liter hergestellt werden.

Die vorliegende Erfindung wird nachfolgend anhand von in den Zeichnungen dargestellten Ausführungsbeispielen näher erläutert und beschrieben. Es zeigen :
- Figur 1: einen erfindungsgemäßen 50 I Spund-Behälter in Perspektivansicht,
- Figur 2: den Mehrwege-Behälter gemäß Fig. 1 in Teilschnitt-Seitenansicht mit eingesetztem Micromatic-Pumprohr,
- Figur 3: eine Bodenansicht des Mehrwege-Behälters gem. Fig. 1,
- Figur 4: einen erfindungsgemäßen Schraubdeckel-Behälter in Perspektivansicht,
- Figur 5: einen 60 | Schraubdeckel-Behälter in Teilschnitt-Seitenansicht,
- Figur 6: einen 25 l Mehrwege-Behälter in Seitenansicht,
- Figur 7: eine Draufsicht auf den Schraubdeckel-Behälter gem. Fig. 4,
- Figur 8: eine Draufsicht auf einen rechteckförmigen Mehrwege-Behälter,
- Figur 9: in Teilschnitt-Seitenansicht den Kopf- und Fußbereich zweier übereinandergestapelter Mehrwege-Behälter,
- Figur 10: einen Teilausschnitt des oberen Stapelringes mit Grifföffnung,
- Figur 11: in Teilschnitt-Seitenansicht den Kopf- und Fußbereich zweier übereinandergestapelter Mehrwege-Behälter mit gegenseitiger Stapelfixierung,
- Figur 12: in Teilschnitt-Seitenansicht den Kopf- und Fußbereich von übereinandergestapelten Mehrwege-Behältern mit anderer Stapelfixierung,
- Figur 13: eine Draufsicht auf eine Palette mit neun Mehrwege-Behältern,
- Figur 14: eine Seitenansicht von palettierten Mehrwege-Behältern,
- Figur 15: eine Draufsicht auf einen Behälter mit quadratischer Grundform,
- Figur 16: eine Draufsicht auf einen Behälter mit hexagonaler Grundform,
- Figur 17: in Seitenansicht einen 70 I Schraubkappen-Behälter und
- Figur 18: in Teilschnitt-Seitenansicht den Kopfbereich eines Deckelbehälters.

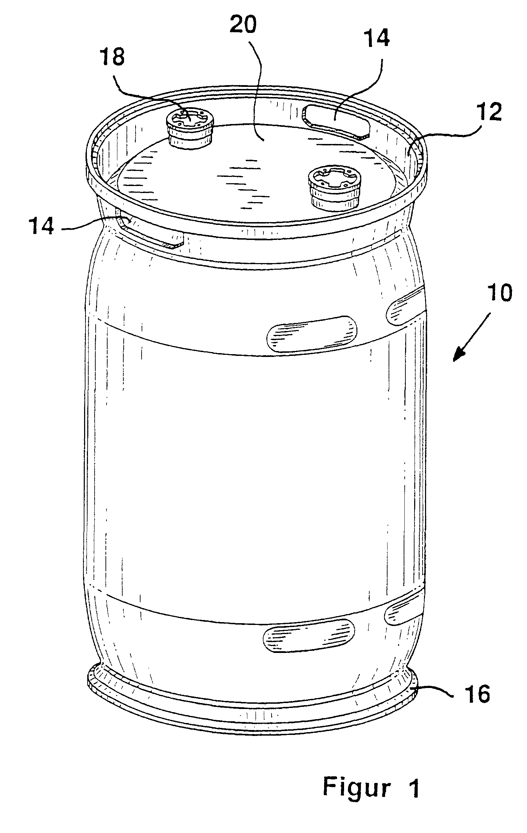

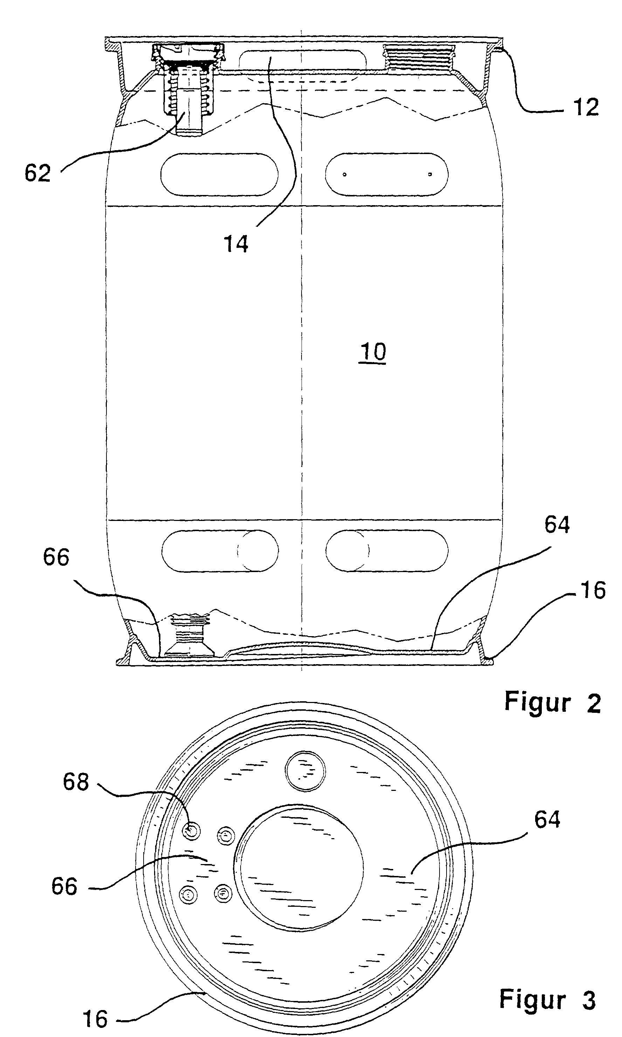

In Figur 1 ist ein bevorzugtes erfindungsgemäßes Ausführungsbeispiel eines Mehrwege-Behälters 10 aus thermoplastischem Kunststoff, hier mit einem Füllvolumen von 50 Litern mit einem Höhe/Durchmessr-Verhältnis von H/D = 1,60 dargestellt. Am oberen Faßrand ist ein integraler, einstückig mit dem Behälterkörper verbundener umlaufender Stapelring 12 (Trage- und Transportring) mit zwei darin sich diametral gegenüberliegenden Grifföffnungen 14 angebracht. Am unteren Rand des Behälterkörpers ist ein entsprechender Standring 16 ausgebildet. Im Oberboden 20 sind zwei sich gegenüberliegende, mit Spundstopfen 18 verschlossene 2 Zoll-Spundstutzen mit Innengewinde ausgebildet. In der Teilschnitt-Seitenansicht in Figur 2 ist ein eingesetztes Pumprohr 62 (Micromatic-Rohr) ersichtlich, das unten unterhalb des Spundes in dem dort ausgebildeten Pumpensumpf 66 auf dem Unterboden 64 aufsteht. Aus der Draufsicht auf den Unterboden 64 in Figur 3 wird deutlich, daß im Bereich des Pumpensumpfes 66 vier nach innen hochstehende Zentriernocken 68 ausgebildet sind, die das untere Ende des Pumprohres 62 zentrieren bzw. dieses im Pumpensumpf positionieren.

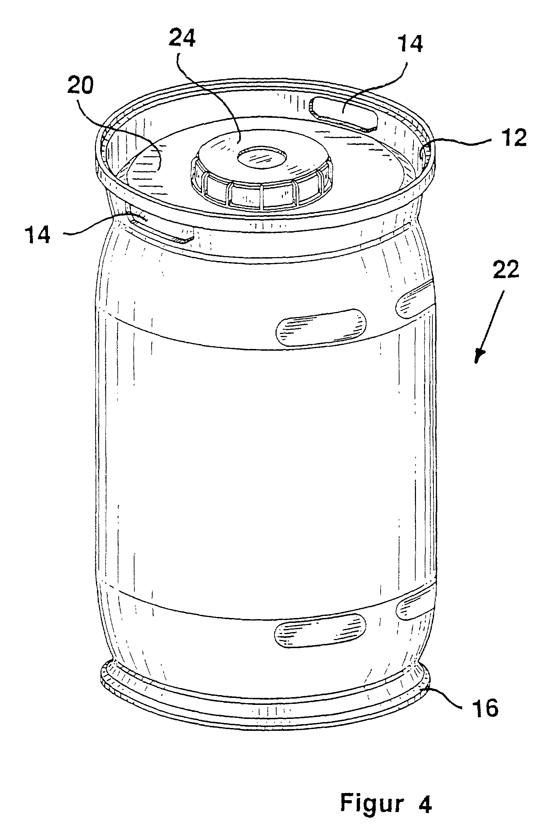

Figur 4 zeigt eine Abwandlung des Mehrwege-Behälters in einer vorteilhaften Ausführung als Schraubdeckel-Fäßchen 22 mit 50 Liter Fassungsvermögen (H/D = 1,60), wobei im Oberboden 20 nur eine zentralmittige große Einfüll- und Entleerungsöffnung vorgesehen ist, die mit einem Schraubdeckel 24 verschlossen wird. Der hochstehende Gewindestutzen kann wahlweise als 2 Zoll- oder 3 Zoll-Spund mit Innengewinde ausgebildet sein und mit einem entsprechenden Spundstopfen mit Außengewinde verschlossen werden, oder der Gewindestutzen ist mit einem Außengewinde versehen und wird mit einer Schraubkappe mit Innengewinde verschlossen. Der Durchmesser kann hierbei ca. 80 mm (für Schraubkappe K 80) bis etwa 400 mm für große Schraubdeckel betragen. Besonders bevorzugt sind gängige Durchmessergrößen von 150 mm, 220 mm oder 250 mm.

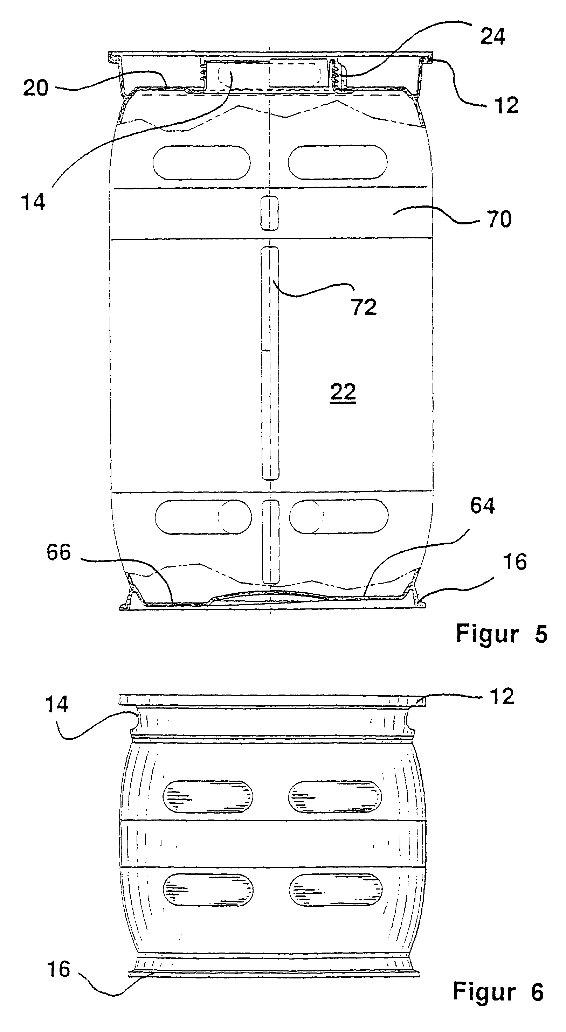

In Figur 5 ist ein 60 Liter Schraubdeckel-Behälter (Durchmesser ca. 380 mm, Höhe ca. 665 mm, H/D-Verhältnis = 1,75) mit eingesetztem Zwischenringstück 70 dargestellt. Der Mehrwege-Behälter kann aus transparentem Kunststoffmaterial (ohne Farbzusatz) oder bei eingefärbtem Kunststoffmaterial mit einem Sichtstreifen 72 hergestellt sein; dann wird zweckmäßigerweise eine Füllstandsskala auf der Behälteraußenwandung vorgesehen. Bei Bedarf können im Übergangsbereich zwischen der zylindrischen Wandung und den gewölbt eingezogenen Wandungsbereichen zwei nach außen vorstehende umlaufende Rollringe vorgesehen sein.

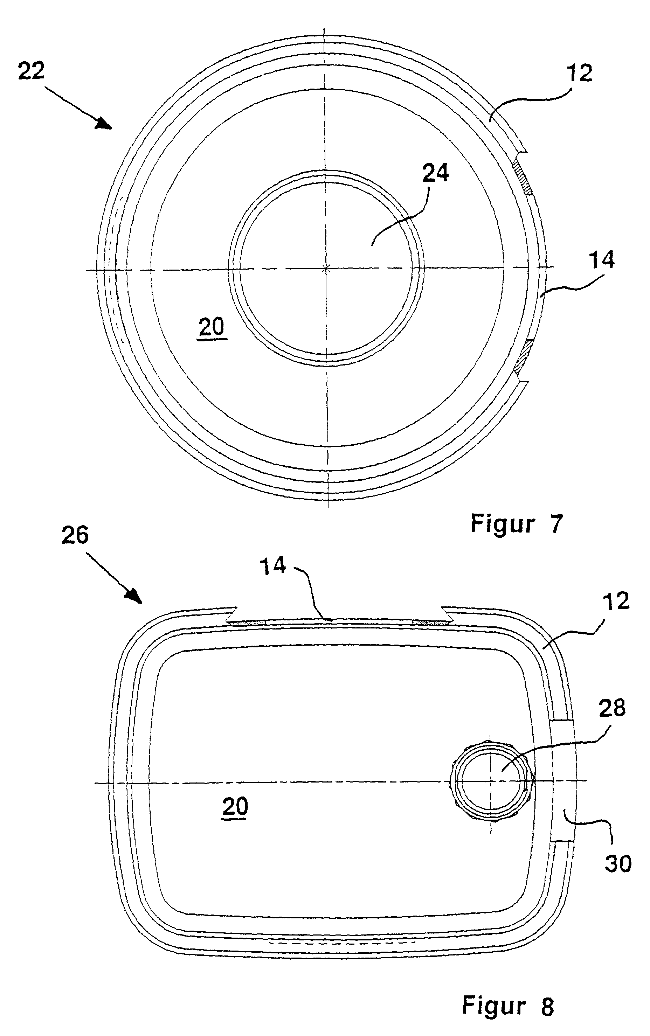

In Figur 6 ist ein kleiner 25 Liter Mehrwege-Behälter mit einem H/D-Verhältnis von 0,97 gezeigt. Figur 7 zeigt in Draufsicht ein Schraubdeckel-Fäßchen 22 mit zentraler Einfüll-und Entleerungsöffnung für den großen Schraubdeckel 24, wobei der obere Stapelring 12 im Bereich der rechten Grifföffnung 14 in Teilschnittdarstellung durchbrochen gezeichnet ist. In Figur 8 ist eine entsprechende Draufsicht auf eine besondere Ausführungsvariante des erfindungsgemäßen Mehrwege-Behälters als Kanisterversion 26 mit oberem L-Ring-förmigem Stapelring 12 gezeigt. Diese Kanisterversion 26 (L-Ring jerrican) weist eine im wesentlichen rechteckförmige Grundform auf, wobei die Grifföffnungen 14 im oberen Stapelring 12 auf den beiden gegenüberliegenden längeren Seitenwandungen angeordnet sind, und die mit Schraubkappe 28 verschlossene Einfüll-und Entleerungsöffnung am äußeren Rand des Oberbodens 20 an einer der beiden dazwischenliegenden kürzeren Seitenwandungen angeordnet ist. Hierbei ist - im Gegensatz zu dem unteren Stapelring - der obere Stapelring 12 nicht vollständig umlaufend ausgebildet, sondern weist vor der Einfüll- und Entleerungsöffnung eine Unterbrechung bzw. Aussparung 30 zum ungehinderten Ausgießen des flüssigen Füllgutes auf. Bei zentraler Anordnung einer großen Einfüll- und Entleerungsöffnung ist auch der obere Stapelring durchgehend umlaufend ausgebildet.

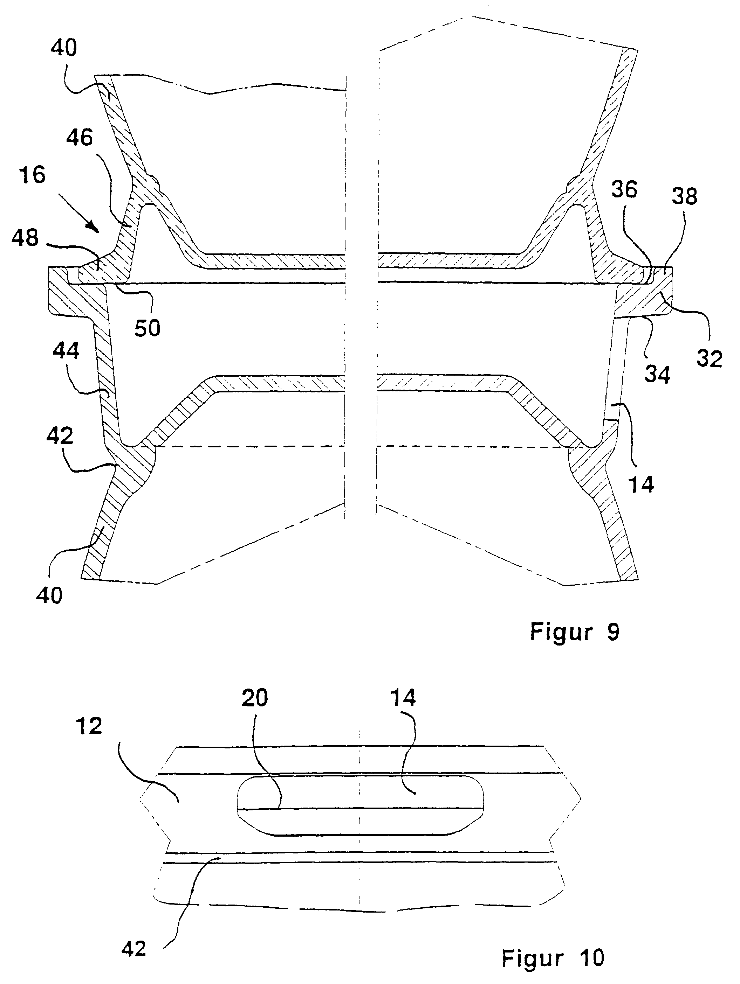

Figur 9 zeigt ausschnittsweise in Teilschnittdarstellung die Eckbereiche von zwei übereinandergestapelten Behältern. Hierbei steht der obere Behälter mit seinem Standring 16 mit der nach unten weisenden horizontalen Auflagefläche 50 seines Fußringes 48 auf der horizontalen, nach oben weisenden Auflagefläche 36 der Abwinkelung 32 des oberen Stapelringes 12 des unteren Behälters auf. Der außenseitig an der Abwinkelung 32 hochstehende Flanschrand 38 (= Zentrierring) zentriert den Fußring 48 des aufgestapelten Fasses und verhindert ein seitliches Verrutschen der Fässer z. B. durch Transporterschütterungen. Bei einer Direktstapelung der Behälter wird der hochstehende Flanschrand 38 in Axialrichtung nicht belastet (keine Hebelwirkung).

Die Behälterwandung 40 ist unterhalb des Anbindungspunktes 42 des Verbindungssteges 44 des oberen Stapelringes wie auch oberhalb des Anbindungspunktes des Verbindungssteges 46 des unteren Standringes 16 über eine Höhe von ca. 100 mm bis hin zum zylindrischen Faßkörperbereich leicht schräg bzw. gewölbt verlaufend ausgebildet. Der größte Neigungswinkel beträgt hierbei etwa 15° bis 20°. Dabei sind gleichfalls der Verbindungssteg 44 des oberen Stapelringes 12 (Neigungswinkel ca. 5°- 8°) sowie der Verbindungssteg 46 des unteren Stabilisierungsringes 16 leicht schräg nach außen verlaufend ausgebildet. Der obere Rand bzw. die Abwinkelung 32 des oberen Stapelringes ist zur Erhöhung der Radialsteifigkeit vergleichsweise dick, d. h. massiv ausgebildet.

Auf der Unterseite der Abwinkelung 32 des oberen Stapelringes 12 ist eine breite, im wesentlichen horizontal oder geringfügig geneigt verlaufende Anlagefläche 34 für die untere Klaue einer Faßgreiferzange ausgebildet. Die obere Klaue der Faßgreiferzange kommt auf der Innenseite der Abwinkelung 32 als Gegenlager in Verlängerung des Verbindungssteges 44 zur Anlage.

Die Teilansicht in Figur 10 zeigt eine Grifföffnung 14 im Stapelring 12. Erfindungsgemäß werden die Behälter vorzugsweise einstückig im Blasformverfahren in einem Arbeitsgang in einer Blasform mit zwei Formschiebern zum Anstauchen der beiden umlaufenden Stapelringe hergestellt, wobei gleichzeitig die Grifföffnungen im oberen Stapelring in der Blasform mittels zweier umlaufender Stanzringe ausgestanzt werden.

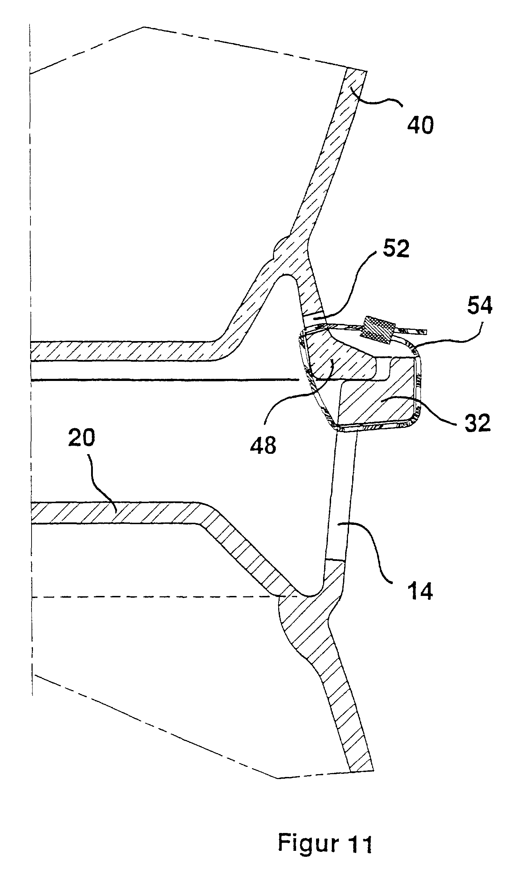

In Figur 11 ist eine Möglichkeit der Transportsicherung der erfindungsgemäßen Behälter dargestellt. Im Verbindungssteg des unteren Stabilisierungsringes bzw. oberhalb des Fußringes 48 sind mehrere gleichmäßig voneinander beabstandete Durchbrechungen 52 eingebracht. Dies können z. B. einfache Bohrungen sein. Es können aber auch querliegende Langlöcher sein, die bereits während des Blasformvorganges beim Anstauchen des Fußringes 48 eingeprägt werden. So kann durch die Durchbrechung 52 und die Grifföffnung 14 ein Befestigungsmittel z. B. ein Bindedraht oder - wie hier gezeichnet - ein Kabelbinder 54 gezogen sein, mittels dem die beiden übereinandergestapelten Behälter fest gegeneinander fixiert werden können. Zur Aufhebung der Fixierung wird der Kabelbinder einfach durchgekniffen.

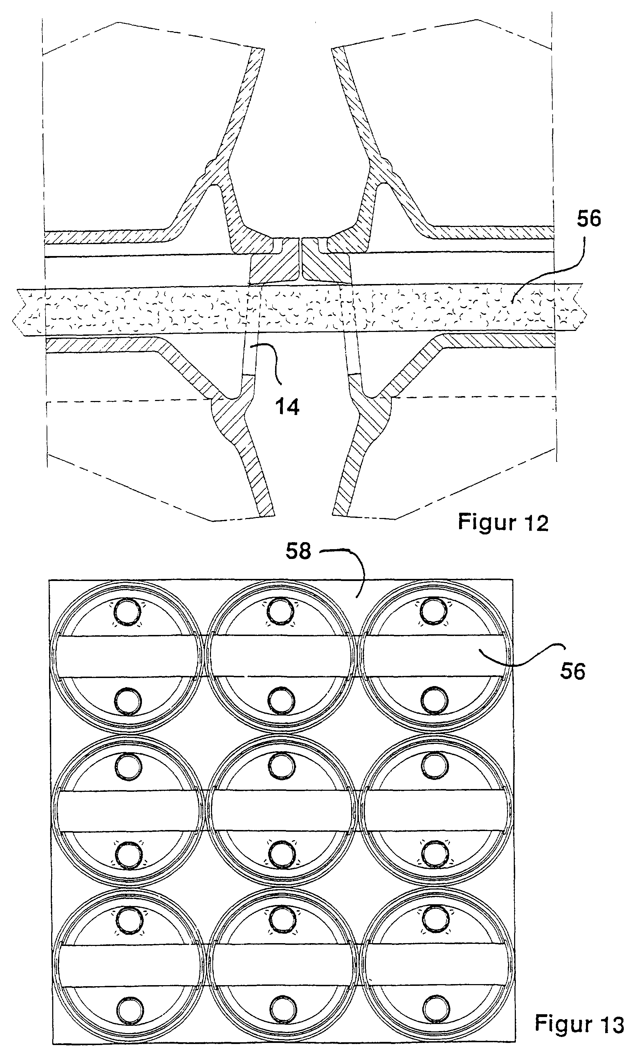

In Figur 12 ist eine weitere Möglichkeit der Transportsicherung mittels einer durch die ausgerichteten Grifföffnungen durchgesteckten Holzlatte 56 als Befestigungsmittel für erfindungsbemäße Behälter gezeigt. Die Draufsicht in Figur 13 verdeutlicht diese Art der Befestigung von nebeneinanderstehenden Behältern auf einer Bodenpalette 58.

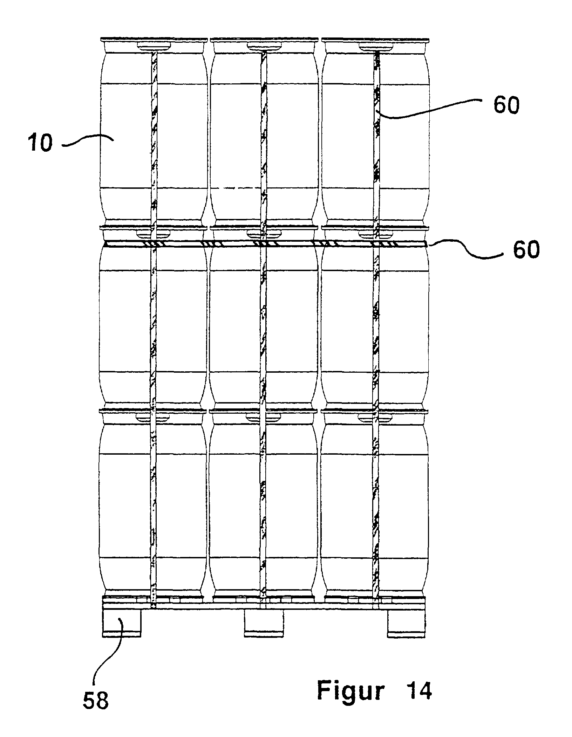

In Figur 14 sind in dreifacher Direktstapelung (ohne weitere Zwischenpaletten) 3 × 3 × 3 = 27 Stück auf eine Bodenpalette 58 aufgestapelte Behälter 10 gezeigt, die zur Erhöhung der Stapelsicherheit insbesondere gegen Transporterschütterungen z. B. mittels vertikal durch die Grifföffnungen im oberen Stapelring und unterhalb des Palettendecks verlaufender sowie mittels horizontal verlaufender, die Behälter umschlingender Spanngurte 60 gegeneinander und auf der Palette 58 selbst fixiert sind.

Bei Verladung von erfindungsgemäßen 60 Liter Behältern (Durchmesser ca. 380 mm, Höhe ca. 665 mm) in einem 20 Fuß ISO-Container (DIN 668) mit einem Freifläche für 10 ISO-Paletten (1140 x 1140 mm) nebeneinander können auf einer ISO-Palette in einer Ebene 9 Behälter, im Dreifachstapel 27 Behälter, bei 10 Paletten 270 Behälter mit einem Gesamtfüllvolumen von 16200 Litern Füllgut verfrachtet werden.

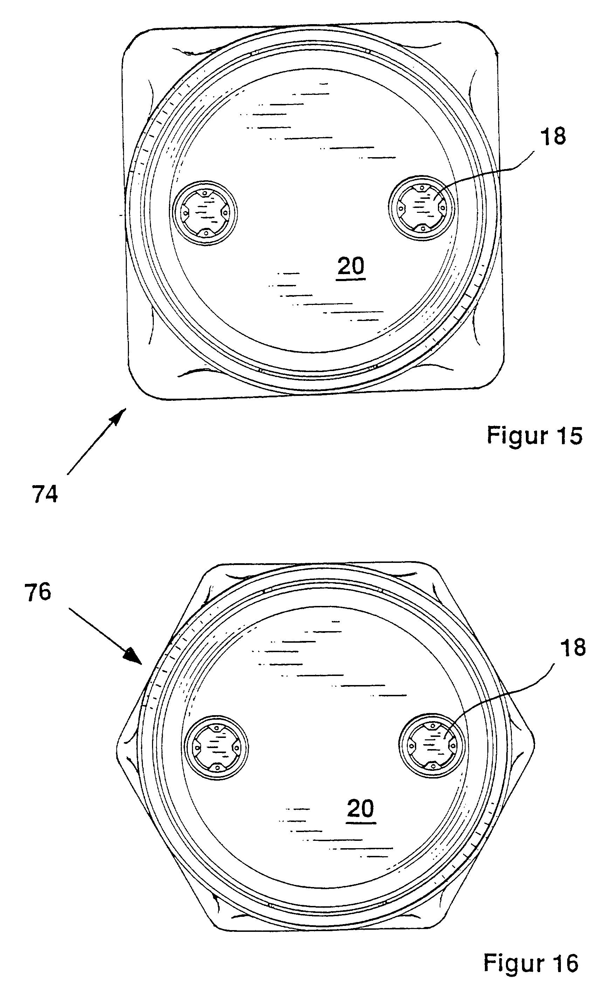

Die erfindungsgemäßen Mehrwege-Behälter können bei rundem Stapel- und Standring im Behälterkörper auch eine annähernd rechteckförmige bzw. quadratische oder hexagonale Grundform aufweisen. In Figur 15 ist ein Rechteck-Behälter 74 und in Figur 16 ein Sechseck-Behälter 76 dargestellt. Die abgerundeten Eckbereiche können dabei auch einen größeren Radius bzw. eine größere Rundung aufweisen.

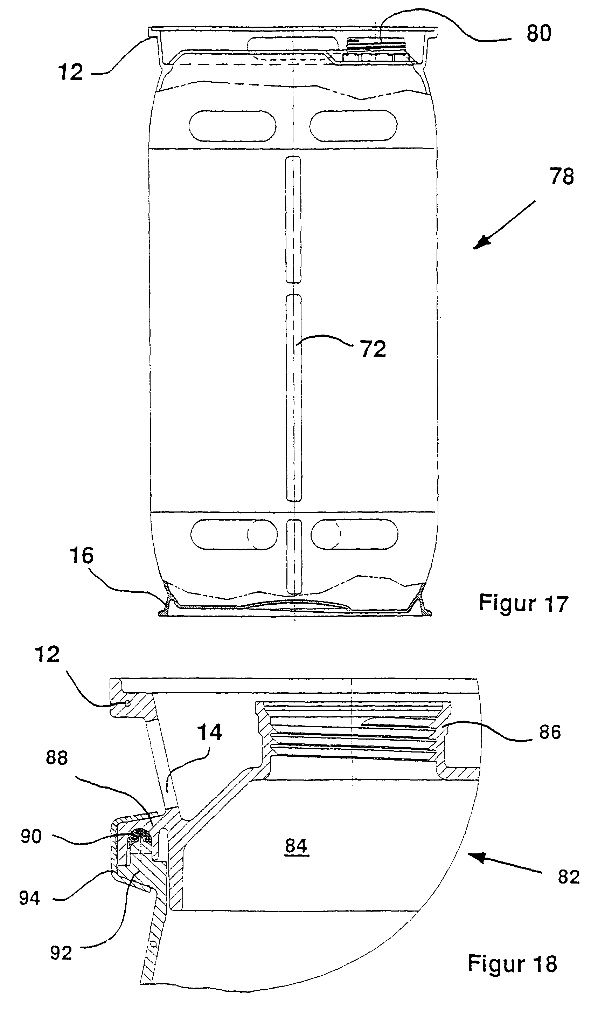

Ein besonderer Hochformat-Behälter 78 mit einem Fassungsvermögen von ca. 70 Litern ist in Figur 17 gezeigt. Der Hochformat-Behälter 78 ist mit einem seitlich im Oberboden angeordneten Einfüll- und Entleerungsstutzen 80 (Durchmesser 80 mm) mit Außengewinde für eine Schraubkappe K 80 ausgestattet. Der Öffnungsstutzen 80 könnte aber auch zentralmittig im Oberboden angeordnet sein.

Eine Sonderausführung eines erfindungsgemäßen Behälters in Ausgestaltung eines Deckelfasses 82 ist in Figur 18 ausschnittsweise dargestellt. Hierbei ist der abnehmbare Deckel 84 mit dem Stapelring 12 (und Grifföffnung 14) und wenigstens einem seitlichen Spundstutzen 86 ausgestattet. Unterhalb des Stapelringes 12 weist der Deckel 84 einen nach unten offenen U-förmigen Deckelflanschrand 88 auf, in den ein Dichtungsring 90 eingelegt bzw. eingeschäumt ist. Der Deckelflanschrand 88 liegt auf einem Mantelflansch 92 am oberen Mündungsrand des Faßkörpers auf. Deckelflanschrand 88 und Mantelflansch 92 werden im Verschlußzustand von einem Spannring 94 gas- und flüssigkeitsdicht zusammengehalten. Dieses Deckelfaß 82 ist besonders für einen Mehrfacheinsatz von zähflüssigen oder granulatförmigen Füllgütern geeignet.

Größere Behälter können für einen Mehrwegeeinsatz in stabiler Ausführung je nach Bedarf auch ein größeres Fassungsvermögen von z. B. 100 I, 120 I, 150 I, 200 I oder 220 I aufweisen. Diese Behälter sind jedoch im befüllten Zustand nicht mehr von Hand manipulierbar, sondern sind vorzugsweise mittels Hubwagen oder Gabelstapler-Fahrzeug mit entsprechenden Faßgreiferwerkzeugen (Papageienschnabel) zu handhaben. Die beschriebenen Merkmale können ohne weiteres gegeneinander ausgetauscht oder/-und miteinander kombiniert werden.

### Bezugsziffernliste

- **10**: Mehrwege-Behälter
- **12**: Stapelring
- **14**: Grifföffnung
- **16**: Standring
- **18**: Spundstopfen
- **20**: Oberboden
- **22**: Schraubdeckel-Fäßchen
- **24**: Schraubdeckel
- **26**: L-Ring-Kanister
- **28**: Schraubkappe
- **30**: Aussparung (12)
- **32**: Abwinkelung (12)
- **34**: untere Anlagefläche Faßareifer
- **36**: horizontale Auflagefläche (32)
- **38**: Zentrierring (32)
- **40**: Behälterwandung (10/22/26)
- **42**: Anbindungspunkt (12/40)
- **44**: Verbindungssteg (12)
- **46**: Verbindungssteg (16)
- **48**: Fußring (46)
- **50**: Auflagefläche (48)
- **52**: Durchbrechung/Bohrung
- **54**: Befestigungsmittel/Kabelbinder
- **56**: Befestigungsmittel/Brett-Latte
- **58**: Palette
- **60**: Spanngurte
- **62**: Pumprohr
- **64**: Unterboden
- **66**: Pumpensumpf
- **68**: Zentriernocken
- **70**: Zwischen-Ringstück
- **72**: Sichtstreifen
- **74**: Rechteck-Behälter
- **76**: Sechseck-Behälter
- **78**: Hochformat-Behälter
- **80**: Einf-/Entleerungsstutzen
- **82**: Deckelfaß
- **84**: Faß-Deckel
- **86**: Spundstutzen
- **88**: Deckelflanschrand
- **90**: Dichtung
- **92**: Mantelflanschrand
- **94**: Spannring

## Patentansprüche

1. Mehrwege-Behälter aus thermoplastischem Kunststoff mit wenigstens einer Einfüll- und Entnahmeöffnung im Oberboden bzw. Behälterdeckel und mit einem oberen und einem unteren umlaufenden Stapelring (12,16),
**dadurch gekennzeichnet, daß**
der obere Stapelring (12) einen etwas größeren Durchmesser als der untere Stapelring (16) aufweist, und daß der obere Stapelring (12) auf seiner oberen Stimkante innenseitig eine dem Durchmesser des unteren Stapelringes (16) angepaßte Einformung und außenseitig einen nach oben stehenden Flanschring (38) derart aufweist, daß bei Übereinanderstapelung der untere Stapelring (16) des oberen Behälters in die Einformung des oberen Stapelringes (12) gestellt und von außen formschlüssig von dem nach oben stehenden Flanschring (38) zentriert wird, wobei der nach oben weisende Verbindungssteg (44) zwischen Behälterkörper und oberem Stapelring (12) leicht schräg konisch nach außen aufgeweitet ist, und wobei der obere Rand am oberen Ende des Verbindungssteges (44) des oberen Stapelringes (12) in Form einer massiven Abwinkelung (32) ausgebildet ist, von welcher der Flanschring (38) außenseitig axial nach oben absteht, und welche auf ihrer Unterseite eine im wesentlichen horizontal oder geringfügig geneigte Anlagefläche (34) für die untere Klaue einer Faßgreiferzange aufweist.

2. Behälter nach Anspruch 1,
**dadurch gekennzeichnet, daß**
in dem nach oben weisenden Verbindungssteg (44) des oberen Stapelringes (12) zwei sich gegenüberliegende Grifföffnungen (14) ausgebildet sind.

3. Behälter nach Anspruch 1 oder 2,
**dadurch gekennzeichnet, daß**
der Behälterkörper (10) in der Mitte über ein gewisses Stück vollzylindrisch ausgebildet und oben und unten zur Anbindungsstelle des oberen (12) und zur Anbindungsstelle des unteren Stapelringes (16) hin leicht gewölbt bzw. konisch eingezogen ist.

4. Behälter nach Anspruch 3,
**dadurch gekennzeichnet, daß**
die Höhe (= axiale Länge) des gewölbten Einzugbereiches der Behälterwandung von der Anbindungsstelle des oberen bzw. unteren Stapelringes (12, 16) bzw. des jeweiligen Verbindungssteges bis zum Beginn des vollzylindrischen Bereiches der Behälterwandung hin ca. 110 mm beträgt.

5. Behälter nach Anspruch 1, 2, 3 oder 4,
**dadurch gekennzeichnet, daß**
bei einem Behälter (10) mit begrenztem Fassungsvermögen von maximal 70 Litern der größte Durchmesser im Bereich der vollzylindrischen Behälterwandung bzw. des äußeren Randes des oberen Stapelringes(12) ca. 380 mm beträgt.

6. Behälter nach wenigstens einem der vorhergehenden Ansprüche 1 bis 5,
**dadurch gekennzeichnet, daß**
der Oberboden (20) im wesentlichen flach bzw. leicht nach außen gewölbt ist und in seinem flachen Randbereich zwei gegenüberliegende, hochstehende Spundstutzen (18) mit gasdicht verschließbaren Spundöffnungen aufweist.

7. Behälter nach Ansprüch 3,
**dadurch gekennzeichnet, daß**
der im wesentlichen flache Oberboden (20) über ein schräg konisches bzw. gewölbt ausgebildetes Ringstück an der Anbindungsstelle des oberen Stapelringes (12) an den konisch eingezogenen Bereich der unteren Behälterwandung angeschlossen ist.

8. Behälter nach einem der vorhergehenden Ansprüche 1 bis 7,
**dadurch gekennzeichnet, daß**
der Unterboden (64) zu einer Seite leicht schräg abfallend derart veriäuft, daß unterhalb eines Spundstutzens (18) eine Mulde (= Senke) als Pumpensumpf (66) ausgebildet ist.

9. Behälter nach einem der vorhergehenden Ansprüche 1 bis 8,
**dadurch gekennzeichnet, daß**
im Unterboden (64) im Bereich des Pumpensumpfes (66) wenigstens drei leicht nach innen hochstehende Einformungen (68) als Zentrierung für das untere Ende eines Pumprohres (z. B. ein Micromatic-Einfüll- und Entleerungssaugrohr) ausgebildet sind.

10. Behälter nach einem der vorhergehenden Ansprüche 1 bls 9,
**dadurch gekennzeichnet, daß**
der mittlere Bereich des Unterbodens (64) zum Zwecke einer besseren Restentleerung leicht nach innen bombiert bzw. nach oben eingewölbt ausgebildet ist.

11. Behälter nach Anspruch 6,
**dadurch gekennzeichnet, daß**
der mittlere Bereich des Oberbodens (20) zwischen den beiden Spundstutzen (18) zum Zwecke einer besseren Überkopf-Restentleerung leicht nach innen bombiert bzw. nach unten eingewölbt ausgebildet ist.

12. Behälter nach einem der vorhergehenden Ansprüche 1 bis 11,
**dadurch gekennzeichnet, daß**
die Behälterwandung mehrschichtig ausgebildet ist und aus wenigstens zwei verschiedenen Kunststoff-Materialien besteht (CoExtrusion).

13. Behälter nach einem der vorhergehenden Ansprüche 1 bis 12,
**dadurch gekennzeichnet, daß**
zentralmittig im Oberboden (20) ein hochstehender Spundstutzen mit Innengewinde mit einer 2 Zoll- oder 3 Zoll-Spundöffnung vorgesehen ist, die mittels eines Spundstopfens mit Außengewinde gas- und flüssigkeitsdicht verschließbar ist.

14. Behälter nach einem der vorhergehenden Ansprüche 1 bis 13,
**dadurch gekennzeichnet, daß**
zentralmittig im Oberboden (20) ein hochstehender Spundstutzen mit Außengewinde mit einem größer/gleich 80 mm Öffnungs-Durchmesser vorgesehen ist, der mittels eines Schraubdeckels (24) mit Innengewinde gas- und flüssigkeitsdicht verschließbar ist.

15. Behälter nach einem der vorhergehenden Ansprüche 1 bis 14,
**dadurch gekennzeichnet, daß**
das Kunststoffmaterial transparent ist, oder- bei eingefärbtem Kunststoffmaterial - ein Sichtstreifen (72) vorgesehen ist, und die Behälterwandung mit einer vorgeprägten Füllstandsskala versehen ist.

16. Behälter nach einem der vorhergehenden Ansprüche 1 bis 15,
**dadurch gekennzeichnet, daß**
in dem unteren Stabilisierungsring (16) bzw, in dem Verbindungssteg (46) oberhalb des abgewinkelten Fußringes (48) wenigstens eine Durchbrechung (52), vorzugsweise mehrere als Bohrung ausgebildete Durchbrechungen (52), vorgesehen sind, durch welche ein Befestigungsmittel (54) (wie z. B. eine Drahtklammer oder ein Kunststoff-Kabelbinder) zur gegenseitigen Fixierung des unteren Stabilisierungsringes (16) eines aufgestapelten Behälters mit dem oberen Handlingsring (12) eines untergestapelten Behälters hindurchführbar ist.

17. Behälter nach Anspruch 2,
**dadurch gekennzeichnet, daß**
wenigstens zwei nebeneinanderstehende Behälter so ausgerichtet sind, daß ihre Grifföffnungen (14) in einer Flucht liegen, so daß ein langgestrecktes Befestigungsmittel (56) (wie z. B. ein Spannband oder eine Holzlatte bzw. ein Brett) durch die Grifföffnungen (14) steckbar ist, und die Behälter gegeneinander fixierbar sind.

18. Behälter nach einem der vorhergehenden Ansprüche 2 oder 16,
**dadurch gekennzeichnet, daß**
mehrere auf eine Palette (58) aufgestapelte Behälter zur Erhöhung der Stapelsicherheit bei Lagerung und Transport mittels durch die Grifföffnungen (14) im oberen Handlingsring (12) oder/und durch die Durchbrechungen (52) im unteren Stabilisierungsring (16) durchgesteckter Befestigungsmittel (54, 56, 60) gegeneinander und/oder auf der Palette (58) selbst fixierbar sind.

19. Behälter nach einem der vorhergehenden Ansprüche 1 bis 18,
**dadurch gekennzeichnet, daß**
der Oberboden (20) mitsamt oberem Stapelring (12) als abnehmbarer Faßdeckel (84) ausgebildet ist und mittels eines Spannringes (94) auf dem Behälterkörper lösbar befestigt ist.

20. Blasform zur Herstellung eines Mehrwege-Behälters aus thermoplastischem Kunststoff nach dem Blasformverfahren,
**gekennzeichnet durch**
eine speziell geformte Kavität für den Mehrwege-Behälter (10), der wenigstens eine Einfüll- und Entnahmeöffnung im Oberboden (12) bzw. im Behälterdeckel (84) und einen oberen und einen unteren umlaufenden Stapelring (12, 16) aufweist, wobei der obere Stapelring (12) einen etwas größeren Durchmesser als der untere Stapelring (16) aufweist, und der obere Stapelring (12) auf seiner oberen Stirnkante innenseitig eine dem Durchmesser des unteren Stapelringes angepaßte Einformung und außenseitig einen nach oben stehenden Flanschring derart aufweist, daß bei Übereinanderstapelung der untere Stapelring des oberen Behälters in die Einformung des oberen Stapelringes (12) gestellt und von außen formschlüssig von dem nach oben stehenden Flanschring zentriert wird, wobei der nach oben weisende Verbindungssteg (44) zwischen Behälterkörper und oberem Stapelring (12) leicht schräg konisch nach außen aufgeweitet ist, und wobei der obere Rand am oberen Ende des Verbindungssteges (44) des oberen Stapelringes (12) in Form einer massiven Abwinkelung (32) ausgebildet ist, von welcher der Flanschring (38) außenseitig axial nach oben absteht, und welche auf ihrer Unterseite eine im wesentlichen horizontal oder geringfügig geneigte Anlagefläche (34) für die untere Klaue einer Faßgreiferzange aufweist.

21. Blasform nach Anspruch 20,
**dadurch gekennzeichnet, daß**
in der Blasform bzw. in den beiden Blasformhälften jeweils ein Einsatz vorgesehen ist, mittels dem die im oberen Stapelring angeordneten Grifföffnungen ausgestanzt werden.

22. Blasform nach Anspruch 20 oder 21,
**dadurch gekennzeichnet, daß**
der vollzylindrische Teil der Blasform - für den mittleren Bereich des Behälters (10) - horizontal geteilt ausgebildet und einfach austauschbar ist, so daß durch entsprechendes Auswechseln und Einsetzen eines jeweiligen Ringstückes verschiedene Behälter mit gleichem Durchmesser, aber mit unterschiedlichen Höhen, z. B. für bevorzugte Füllvolumen von 25, 30, 50, 60 oder 70 Litern herstellbar sind.

## Claims

1. A reusable container of thermoplastic material, with at least one filling and removal opening in the top or container lid and with one upper and one lower peripheral stacking ring (12, 16), **characterized in that** the upper stacking ring (12) has a slightly larger diameter than the lower stacking ring (16), and the upper stacking ring (12) comprises on its upper end edge on the inside a recess adapted to the diameter of the lower stacking ring (16) and on the outside an upwardly projecting flange ring (38), in such a way that, when stacked one on top of the other, the lower stacking ring (16) of the upper container is inserted in the recess of the upper stacking ring (12) and centred from the outside in a positively locking manner by the upwardly projecting flange ring (38), wherein the upwardly directed connecting web (44) between the container body and the upper stacking ring (12) is widened outwards in a slightly obliquely conical manner, and wherein the upper edge at the upper end of the connecting web (44) of the upper stacking ring (12) is designed in the form of a solid angled portion (32) from which the flange ring (38) projects axially upwards on the outside and the underside of which has a substantially horizontal or slightly inclined contact surface (34) for the lower claw of a barrel-gripper.

2. A container according to Claim 1, **characterized in that** two mutually opposed gripping openings (14) are formed in the upwardly facing connecting web (44) of the upper stacking ring (12).

3. A container according to Claim 1 or 2, **characterized in that** the container body (10) is of full cylindrical construction over a certain distance in the middle and slightly curved or conically reduced at the top and bottom towards the connecting point of the upper stacking ring (12) and towards the connecting point of the lower stacking ring (16).

4. A container according to Claim 3, **characterized in that** the height (=axial length) of the curved reduced region of the container wall from the connecting point of the upper or lower stacking ring (12, 16) or of the respective connecting web to the beginning of the full cylindrical region of the container wall is about 110 mm.

5. A container according to Claim 1, 2, 3 or 4, **characterized in that** in a container (10) with a limited capacity of a maximum of 70 litres the largest diameter in the region of the full cylindrical container wall or of the outer edge of the upper stacking ring (12) is about 380 mm.

6. A container according to at least one of the preceding Claims 1 to 5, **characterized in that** the top (20) is essentially flat or curved slightly outwards and in its flat edge region it comprises two opposed upright bung sockets (18) with bung openings closable in a gas-tight manner.

7. A container according to Claim 3, **characterized in that** the essentially flat top (20) is connected by an obliquely conical or curved ring piece at the point of connexion of the upper stacking ring (12) to the conically reduced region of the lower container wall.

8. A container according to one of the preceding Claims 1 to 7, **characterized in that** the bottom (64) slopes down slightly obliquely to one side in such a way that below a bung socket (18) a depression (=hollow) is formed as a pump sump (66).

9. A container according to one of the preceding Claims 1 to 8, **characterized in that** at least three recesses (68) projecting upwards slightly towards the inside are formed in the bottom (64) in the region of the pump sump (66) as a means of centring the lower end of a pump tube (e.g. a Micromatic filling and emptying suction tube).

10. A container according to one of the preceding Claims 1 to 9, **characterized in that** the central region of the bottom (64) is cambered slightly inwards or curved upwards for the purpose of better emptying of residues.

11. A container according to Claim 6, **characterized in that** the central region of the top (20) between the two bung sockets (18) is cambered slightly inwards or curved downwards for the purpose of better emptying of residues overhead.

12. A container according to one of the preceding Claims 1 to 11, **characterized in that** the container wall is multi-layered and consists of at least two different plastic materials (co-extrusion).

13. A container according to one of the preceding Claims 1 to 12, **characterized in that** an upright internally threaded bung socket with a two-inch or three-inch bung opening, which can be closed in a gas-tight and liquid-tight manner with an externally threaded bung, is provided centrally in the top (20).

14. A container according to one of the preceding Claims 1 to 13, **characterized in that** an upright externally threaded bung socket with an opening diameter larger than or equal to 80 mm, which can be closed in a gas-tight and liquid-tight manner with an internally threaded screw cap (24), is provided centrally in the top (20).

15. A container according to one of the preceding Claims 1 to 14, **characterized in that** the plastic material is transparent or, if the plastic material is dyed, a viewing strip (72) is provided, and the container wall is provided with a pre-stamped level scale.

16. A container according to one of the preceding Claims 1 to 16, **characterized in that** in the lower stabilising ring (16) or in the connecting web (46) above the angled base ring (48) at least one aperture (52), preferably a plurality of apertures (52) designed as holes are provided, through which a fastening means (54) (such as e.g. a wire clip or a plastic cable tie) can be passed for mutually fixing the lower stabilising ring (16) of a container stacked on top to the upper handling ring (12) of a container stacked underneath.

17. A container according to Claim 2, **characterized in that** at least two adjacent containers are oriented in such a way that their gripping openings (14) are aligned, so that an elongate fastening means (56) (such as *e.g.* a tightening strap or a wooden batten or a board) can be passed through the gripping openings (14), and the containers can be fixed with respect to one another.

18. A container according to one of the preceding Claims 2 or 16, **characterized in that** to increase the stacking reliability during storage and transport a plurality of containers stacked on top of a pallet (58) can be fixed together and/or to the pallet (58) itself by fastening means (54, 56, 60) passed through the gripping openings (14) in the upper handling ring (12) and/or through the apertures (52) in the lower stabilising ring (16).

19. A container according to one of the preceding Claims 1 to 18, **characterized in that** the top (20) together with the upper stacking ring (12) is designed in the form of a removable barrel lid (84) and is detachably fastened to the container body by means of a clamping ring (94).

20. A blow mould for the manufacture of a reusable container from thermoplastic material in accordance with the blow-moulding method, **characterized by** a specially shaped cavity for the reusable container (10) comprising at least one filling and removal opening in the top (12) or in the container lid (84) and one upper and one lower peripheral stacking ring (12, 16), wherein the upper stacking ring (12) has a slightly larger diameter than the lower stacking ring (16), and the upper stacking ring (12) comprises on its upper end edge on the inside a recess adapted to the diameter of the lower stacking ring and on the outside an upwardly projecting flange ring, in such a way that, when stacked one on top of the other, the lower stacking ring of the upper container is inserted in the recess of the upper stacking ring (12) and centred from the outside in a positively locking manner by the upwardly projecting flange ring, wherein the upwardly directed connecting web (44) between the container body and the upper stacking ring (12) is widened outwards in a slightly obliquely conical manner, and wherein the upper edge at the upper end of the connecting web (44) of the upper stacking ring (12) is designed in the form of a solid angled portion (32) from which the flange ring (38) projects axially upwards on the outside and the underside of which has a substantially horizontal or slightly inclined contact surface (34) for the lower claw of a barrel-gripper.

21. A blow mould according to Claim 20, **characterized in that** in the blow mould or in each of the two blow mould halves an insert is provided by means of which the gripping openings arranged in the upper stacking ring are punched out.

22. A blow mould according to Claim 20 or 21, **characterized in that** the full cylindrical portion of the blow mould - for the central region of the container (10) - is horizontally split and easy to exchange, so that by corresponding exchange and insertion of a respective ring piece, different containers with the same diameter but with different heights can be made, e.g. for preferred filling volumes of 25, 30, 50, 60 or 70 litres.

## Revendications

1. Récipient réutilisable en matière synthétique thermoplastique, qui comporte au moins un orifice de remplissage et de prélèvement ménagé dans son fond supérieur, respectivement dans son couvercle, et deux cerceaux de gerbage continus, l'un supérieur (12) et l'autre inférieur (16), **caractérisé en ce que** le diamètre du cerceau de gerbage supérieur (12) est légèrement plus grand que celui du cerceau de gerbage inférieur (16) et que le cerceau de gerbage supérieur (12) est pourvu sur la face intérieure de son bord supérieur d'un moulage adapté au diamètre du cerceau de gerbage inférieur et sur son côté extérieur d'un rebord annulaire (38) saillant vers le haut de sorte que lors du gerbage de plusieurs récipients, le cerceau de gerbage inférieur (16) du récipient supérieur est posé dans le moulage du cerceau de gerbage supérieur (12) du récipient inférieur et est centré automatiquement depuis l'extérieur par le rebord annulaire de centrage (38), étant précisé que la zone de liaison (44) entre le corps du récipient et le cerceau de gerbage supérieur (12), orientée vers le haut, s'élargit avec une légère inclinaison conique vers l'extérieur et que le cerceau de gerbage supérieur (12) présente à l'extrémité supérieure de la zone de liaison (44) la forme d'un coude massif (32) à partir duquel le rebord annulaire de centrage (38) est saillant axialement vers le haut et dont la face inférieure forme une surface de contact (34) sensiblement horizontale ou légèrement inclinée, destinée à la griffe inférieure d'un outil de préhension du récipient.

2. Récipient selon la revendication 1, **caractérisé en ce que** dans la zone de liaison (44) du cerceau de gerbage supérieur (12) saillant vers le haut, sont prévues deux ouvertures de préhension (14) se faisant face.

3. Récipient selon les revendications 1 ou 2 **caractérisé en ce que** le corps du récipient (10) présente une zone médiane cylindrique qui se prolonge, de part et d'autre en direction vers les endroits de rattachement (42) des cerceaux de gerbage supérieur (12) et inférieur (16), par une zone rentrante légèrement bombée, respectivement inclinée de manière conique vers l'intérieur.

4. Récipient selon la revendication 3 **caractérisé en ce que** la hauteur (= longueur axiale) des zones rentrantes bombées du corps du récipient, mesurées depuis l'endroit de rattachement (42) des cerceaux de gerbage supérieur (12) et inférieur (16), respectivement depuis la zone de liaison correspondante jusqu'au début de la zone cylindrique du corps du tonneau, est d'environ 110 mm.

5. Récipient selon les revendications 1, 2, 3 ou 4 **caractérisé en ce que** dans le cas d'un récipient (10) d'une capacité limitée à 70 litres au maximum, le plus grand diamètre dans la zone cylindrique du corps du récipient, respectivement du bord extérieur du cerceau de gerbage supérieur (12), est d'environ 380 mm.

6. Récipient selon l'une des revendications 1 à 5 **caractérisé en ce que** le fond supérieur (20) est sensiblement plan, respectivement légèrement convexe, et comporte dans sa zone plane proche de son bord, deux manchons de bonde (18) se faisant face, saillant vers le haut, dont l'ouverture peut être fermée de manière étanche aux gaz.

7. Récipient selon la revendication 3 **caractérisé en ce que** le fond supérieur (20) sensiblement plan est relié, par l'intermédiaire d'une zone annulaire inclinée, respectivement bombée de manière conique, à la zone rentrante conique du corps du récipient au niveau de l'endroit de rattachement du cerceau de gerbage supérieur (12).

8. Récipient selon l'une des revendications 1 à 7 **caractérisé en ce que** le fond inférieur (64) est d'un côté légèrement incliné vers le bas de façon a former une cuvette (= dépression) constituant un puisard (66) situé en dessous du manchon de bonde (18).

9. Récipient selon l'une des revendications 1 à 8 **caractérisé en ce que** dans la zone du puisard (66) dans le fond inférieur (64) sont prévus au moins trois reliefs (68) saillant légèrement vers l'intérieur, assurant le centrage de l'extrémité inférieure d'un tube de pompage (par exemple d'un tube Micromatic de remplissage et de vidange par aspiration).

10. Récipient selon l'une des revendications 1à 9 **caractérisé en ce que** en vue d'une meilleure vidange du liquide résiduel, la zone centrale du fond inférieur (64) est légèrement bombée vers l'intérieur, respectivement vers le haut.

11. Récipient selon la revendication 6 **caractérisé en ce que** en vue d'une meilleure vidange du liquide résiduel lorsque le récipient est retourné, la zone centrale du fond supérieur (20) située entre les deux manchons de bonde (18) est légèrement bombée vers l'intérieur, respectivement vers le bas.

12. Récipient selon l'une des revendications 1 à 11 **caractérisé en ce que** le corps du récipient comporte plusieurs couches et est constitué d'au moins deux matériaux synthétiques différents (co-extrusion).

13. Récipient selon l'une des revendications 1 à 12 **caractérisé en ce que** au centre du fond supérieur (20) est prévu un manchon de bonde saillant vers le haut, pourvu d'un taraudage, dont l'ouverture de bonde présente un diamètre compris entre 2 et 3 pouces et peut être obturée de manière étanche aux gaz et aux liquides par un bondon pourvu d'un filetage.

14. Récipient selon l'une des revendications 1 à 12 **caractérisé en ce que** au centre du fond supérieur (20) est prévu un manchon de bonde saillant vers le haut, pourvu d'un filetage, dont l'ouverture de bonde présente un diamètre supérieur/égal à 80 mm et peut être obturée de manière étanche aux gaz et aux liquides par un couvercle vissable (24) pourvu d'un taraudage.

15. Récipient selon l'une des revendications 1 à 14 **caractérisé en ce que** la matière synthétique est transparente ou qu'il est prévue une bande de visualisation (72) lorsque la matière synthétique est colorée et qu'il est prévu dans le corps du récipient une échelle graduée estampée, indiquant le niveau de remplissage.

16. Récipient selon l'une des revendications 1 à 15 **caractérisé en ce que** dans le cerceau inférieur de stabilisation (16) respectivement la zone de liaison (46), est prévu au dessus de l'anneau d'assise coudé (48), au moins une ouverture (52), de préférence plusieurs ouvertures (52) constituées par des alésages à travers lesquels peut passer un moyen de fixation (54) (par exemple une attache en fil de fer ou un câble d'attache en matière synthétique) en vue de l'immobilisation réciproque du cerceau inférieur de stabilisation (16) d'un récipient gerbé supérieur par rapport au cerceau supérieur de maniement (12) du récipient gerbé inférieur.

17. Récipient selon la revendication 2 **caractérisé en ce que** au moins deux récipients disposés l'un à côté de l'autre sont orientés de sorte que leurs ouvertures de préhension (14) sont alignées afin qu'un moyen de fixation allongé (56) (par exemple une sangle de serrage ou une latte, respectivement une planche) puisse être engagé à travers lesdites ouvertures de préhensions (14) en vue d'immobiliser réciproquement les récipients les uns par rapport aux autres.

18. Récipient selon l'une des revendications 2 ou 16 **caractérisé en ce que** en vue d'accroître la sécurité de gerbage et de transport, plusieurs récipients gerbés sur une palette (58) peuvent être immobilisés les uns par rapport aux autres ou/et sur la palette par des moyens de fixation (54), (56), (60) passant à travers les ouvertures de préhension (14) dans le cerceau supérieur de maniement (12) et/ou à travers les ouvertures (52) dans le cerceau inférieur de stabilisation (16).

19. Récipient selon l'une des revendications 1 à 18 **caractérisé en ce que** le fond supérieur (20) et le cerceau de gerbage supérieur (12) forment ensemble un couvercle de tonneau (84) amovible, monté sur le corps du récipient par un anneau tendeur (94).

20. Moule de soufflage pour la fabrication de récipients réutilisables en matière synthétique au moyen d'un procédé de moulage par soufflage **caractérisé par** une cavité de forme particulière correspondant au récipient réutilisable (10) qui comporte au moins un orifice de remplissage et prélèvement ménagé dans le fond supérieur (12), respectivement le couvercle (84) du récipient, et deux cerceaux de gerbage continus, l'un supérieur (12) et l'autre inférieur (16), étant précisé que le diamètre du cerceau de gerbage supérieur (12) est légèrement plus grand que celui du cerceau de gerbage inférieur (16) et que le cerceau de gerbage supérieur (12) est pourvu sur la face intérieure de son bord supérieur d'un moulage adapté au diamètre du cerceau de gerbage inférieur et sur son côté extérieur d'un rebord annulaire (38) orienté vers le haut de sorte que lors du gerbage de plusieurs récipients, le cerceau de gerbage inférieur (16) du récipient supérieur soit posé dans le moulage du cerceau de gerbage supérieur (12) du récipient inférieur et soit centré automatiquement depuis l'extérieur par le rebord annulaire de centrage (38), étant précisé que la zone de liaison (44) entre le corps du récipient et le cerceau de gerbage supérieur (12), orientée vers le haut, s'élargit avec une légère inclinaison conique vers l'extérieur et que le cerceau de gerbage supérieur (12) présente à l'extrémité supérieure de la zone de liaison (44) la forme d'un coude massif (32) à partir duquel le rebord annulaire de centrage (38) est saillant axialement vers le haut et dont la face inférieure forme une surface de contact (34) sensiblement horizontale ou légèrement inclinée, destinée à la griffe inférieure d'un outil de préhension du récipient.

21. Moule de soufflage selon la revendication 20 **caractérisé en ce que** dans le moule, respectivement dans chacune des moitiés de moule, est prévu un insert pour découper les ouvertures de préhension dans le cerceau de gerbage supérieur.

22. Moule de soufflage selon les revendications 20 ou 21 **caractérisé en ce que** la partie cylindrique du moule ― correspondant à la zone médiane du récipient (10) ― est divisée horizontalement et échangeable aisément de sorte que par un échange et une mise en place correspondante d'une pièce annulaire, il est possible de fabriquer différents récipients de même diamètre mais de hauteurs différentes, ayant par exemple une capacité de 25, 30, 50, 60 ou 70 litres.
